Europäisches Patentamt

European Patent Office

Office européen des brevets

(11) Publication number: **0 428 469 A2**

# (12) EUROPEAN PATENT APPLICATION

(21) Application number: **90500102.0**

(22) Date of filing: **05.11.90**

(51) Int. Cl.5: **D06F 37/30, H02P 7/00**

(30) Priority: **14.11.89 ES 8903875**

(43) Date of publication of application:
**22.05.91 Bulletin 91/21**

(84) Designated Contracting States:
**DE FR GB IT**

(71) Applicant: **FAGOR. S.COOP. LTDA.**
**B. San Andrés, s/n**
**E-20500 Mondragon (Guipuzcoa)(ES)**

(72) Inventor: **Aguirre Arregui, Juan Manuel**
**C/Iturriotz, 10-2-A**
**Mondragon (Guipuzcoa)(ES)**
Inventor: **Sales Villalabeitia, Fernando**
**Barrio Uribe-Auzoa, 22-3 A**
**Mondragon (Guipuzcoa)(ES)**

(74) Representative: **Carpintero Lopez, Francisco**
**HERRERO & ASOCIADOS, S.L. Alcalá, 21**
**E-28014 Madrid(ES)**

(54) **Digital speed controller for washing machine motors.**

(57) PH controller where phase controlling takes place relying upon a micro-controller. Speed selection is by means of external switches governed by the system of contacts of an electromechanical programmer.

The micro-controller has a program in charge of measuring motor speed. This measure is taken from the signal delivered by a tachymetric pick-up (tachogenerator). It also contains a control algorithm deciding, from the speed error obtained, the tripping angle from the passage through network zero to drive a power element (triac) to energise the washing machine motor.

FIG.-1

EP 0 428 469 A2

# DIGITAL SPEED CONTROLLER FOR WASHING MACHINE MOTORS

## SPECIFICATION

### OBJECT OF THE INVENTION

The instant invention relates, as set forth in the heading, to a phase controlling digital speed controller for washing machine motors, relying on the use of a micro-controller affording accurate control over motor speed even if the load is not uniformly distributed within the machine drum, fitting of other complementary services also being possible.

### BACKGROUND TO THE INVENTION

The clothes washing process in an automatic washing machine basically involves rotating its drum, driven by the motor, in both directions of rotation. This speed is called washing speed, and varies between 30 and 55 drum rpm. A pre-wash stage can also exist during which the drum also turns albeit at rate different than the washing stage. Partial clothes drying is finally effected, rotating the drum at high speed to such end. This speed is the centrifugation speed and varies between 300 and 1,200 drum rpm. Washing speed does not change to centrifugation speed directly, but rather gradually and keeping up controlled acceleration until the clothes are suitably distributed along the drum walls. This gradual rise is called distribution slope and begins at washing speed to finally reach a speed called distribution point, ranging between 100 and 120 drum rom. The purpose of the distribution slope is, obviously as the word itself indicates, to distribute the clothes as best as possible on the drum periphery to avoid a possible load imbalance that might bring about high revolution machine disruptions.

In this light, it would appear necessary to avail of an electronic speed control mechanism for the washing machine washing motor.

This control is effected in a closed loop so that the speed measured by a tachogenerator is compared with the requisite speed and an alarm is given. The control algorithm obtains a given tripping angle from such speed error for a triac that energises the motor.

A control algorithm is laid down not strictly dependent, as opposed to other algorithms, upon the speed measured, that could be somewhat deflected from the real speed because of the inherent tachogenerator irregularity or phase monitoring noises, but solely dependent upon the alarm, which means that less measurement accuracy is permissible. This idea allows the control algorithm greater freedom with regard to measurement deflections.

Furthermore, it is a well-known fact that when wet clothes are not uniformly distributed along the drum walls following the distribution slope, serious problems could arise during centrifugation. At a high speed, the load imbalance could lead to considerable washing machine vibration, which can result in its mechanical elements (suspension and other elements) wearing. The machines must be designed to withstand the worst imbalance event, in other words, there is a cost in mechanical parts that cannot be underrated. The micro-controller-based electronic circuit subject hereof overcomes such disadvantages because it avails of a method to detect load imbalances. This allows the design of the machine's suspension and other elements to be less compromising since such elements will be under less mechanical strain than if no imbalance detection were available.

Some solutions aim at providing an imbalance sensor element relying upon drum shaft displacement. The main disadvantage is that the machine becomes more expensive. Other solutions propose a follow-up of the motor current with the disadvantage of adding components to the speed controlling electronic module.

The subject detection of imbalances is based upon studying the different in energy supply to the motor during the time employed by the detection test.

### DESCRIPTION OF THE INVENTION

The digital speed controller set forth herein is a speed controlling mechanism for a universal washing machine motor. Phase controlling takes place relying upon a micro-controller. Speed selection is effected by external switches governed by the contacts system of an electromechanical programmer. The micro-controller is equipped with a main program measuring motor speed. This measure is taken from the signal given by a tachymetric pick-up (tachogenerator) having eight pairs of poles. It is also fitted with a control algorithm that decides, from the speed error obtained, the tripping angle going from network zero to activate a power element (triac) that energises the washing machine motor. Some significant services are added, such as the detection of load imbalances in the drum, safety against malfunctioning of the tachogenerator or limitation of current in the motor.

DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Shows a diagram of the electronic circuit of the digital speed controller for washing machine motors subject hereof, illustrating each and every single element used to develop operation thereof.

Figure 2.- Shows the flow diagram of the main program fitted in the micro-controller governing the system.

Figure 3.- Shows the flow diagram of the program to treat an external outage.

Figure 4.- Shows the flow diagram of the timer outage subprogram.

Figure 5.- Shows the flow diagram of the control algorithm subprogram.

Figure 6.- Shows the flow diagram of the tachogenerator fault protection subprogram.

Figure 7.- Shows the flow diagram of the current protection subprogram.


PREFERRED EMBODIMENT OF THE INVENTION

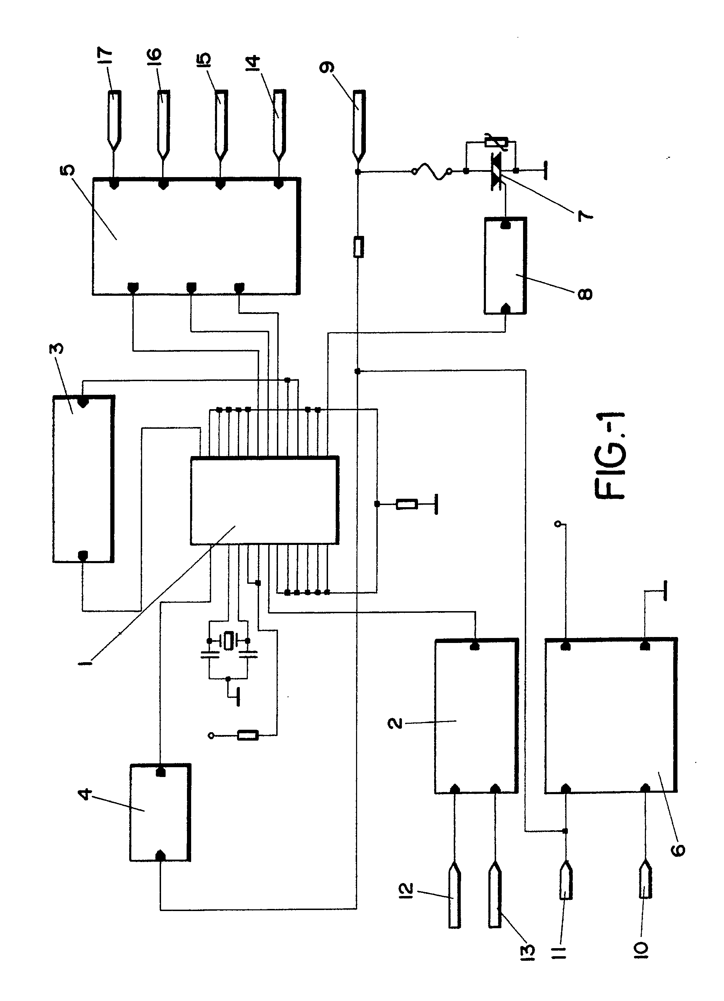

In the light of figure 1, it can be observed that the digital speed controller for washing machine motors subject hereof comprises a micro-processor (1) in conjunction with which is the tachymetric pick-up signal conditioner circuit (2), a monitoring circuit (3) and a network signal phase lock loop (4), all of this with the assistance of a mechanism (5) supplying the different orders to the micro-controller (1) and a power supply (6) with its level suited to the controller assembly. The element to control is a triac (7), such control taking place by means of a triggering circuit (8) according to the orders sent by the micro-processor (1).

As can be clearly seen in figure 1, the universal washing machine motor is connected between terminals (9) and (10). The mains lead is connected between (11) and N. Energy supplied to the motor is controlled by the triac (7), connected in series to the washing motor. A tachogenerator coupled to the motor rotor gives an amplitude and frequency signal proportional to the motor speed. This signal is applied to the electronic module through the tachymetric pick-up terminals (12) and (13). The order input terminals are as follows: washing (14), centrifugation 1 (15), centrifugation 2 (16) and common (17). These inputs are commanded by a programmer, that decides which of them must be active or inactive.

The network signal phase lock loop (4) receives a 0 level and 5V. and 50 Hz. frequency square signal. It is used as reference for the external outage used by the micro-controller.

Finally, there is a monitoring or watchdog circuit (3) to recommence the process in the event of program losses or malfunctioning stored in the micro-controller.

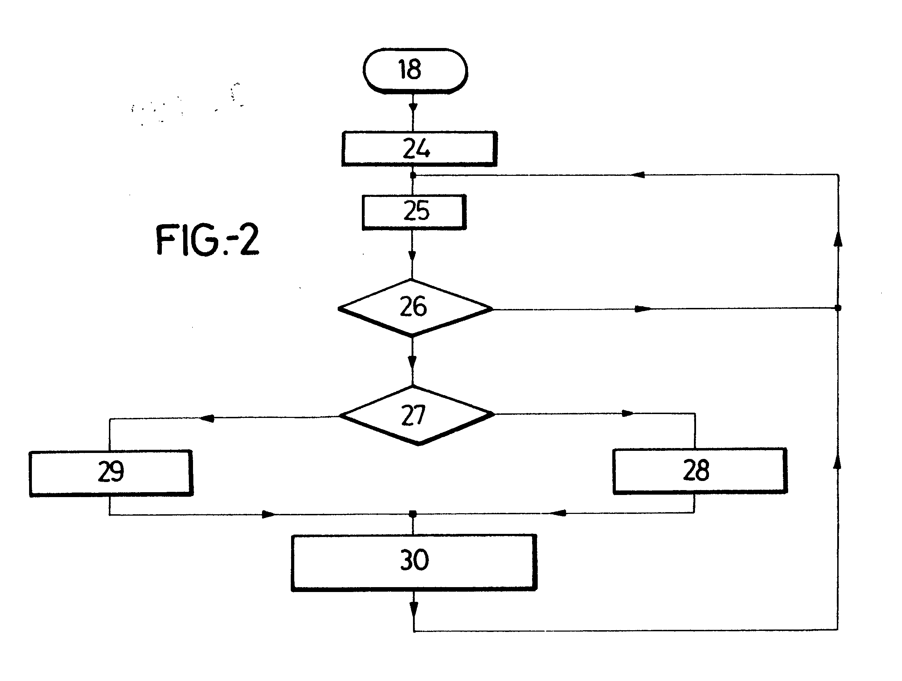

Figures 2 through to 7, references (18), (19-19'), (20-20'), (21-21'), (22-22') and (23-23') correspond to the beginning and end of the programs/subprograms corresponding to the flow diagrams represented in such figures. The references in these flow diagrams correspond to what are hereinafter referred to as steps within the diagram.

In connection with figure 2, the main control program (18) starts to carry out a subprogram of initialisations referred to the state of the micro-controller part, washing motor stop, initialisations of variables and so forth (step 24).

Monitoring takes place in the watchdog block (step 25) in order not to reset the micro-controller. Should there be any program malfunctioning or loss, the watchdog (3) would not act and the micro-controller (1) would be reset for the whole process to begin again.

Until the electromechanical program sends a code for a washing or centrifugation order (step 26) the loop is repeated indefinitely. Otherwise, there are two options: washing or centrifugation (step 27). In the first of the two, a tachogenerator semi-period is measured (step 28) and in the second one, reading is for eight whole periods (step 29).

Once the speed information is available, the control algorithm is carried out, thereby to obtain the washing motor triac (7) new tripping angle (Alpha) (step 30).

The main program can be interrupted by two types of outages: external and timer outage.

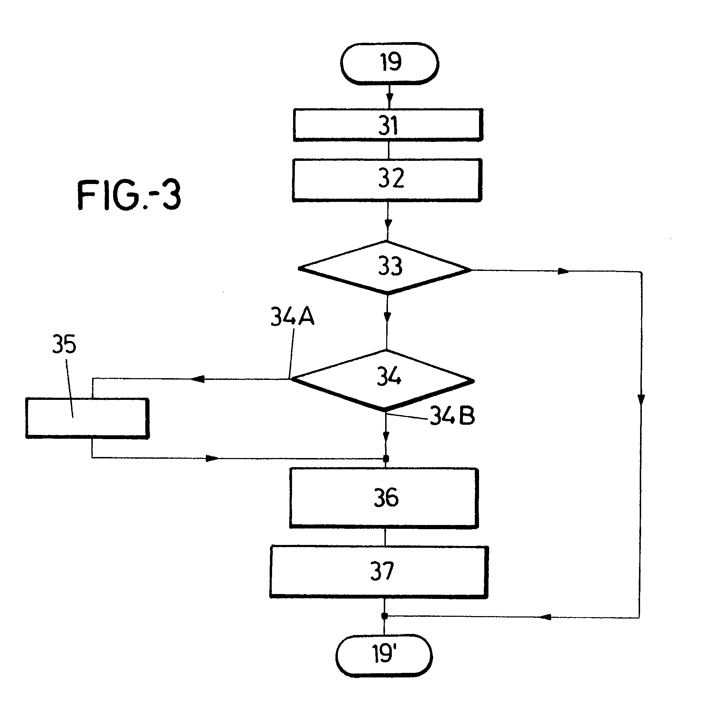

In figure 3, the external outage pin input signal is synchronised with the network signal. This is the reference for washing motor phase controlling.

First of all, the timer is initialised for the latter to start discounting time corresponding to the triac (7) tripping angle. This angle is always referred to the network signal at zero (step 31).

Then, the ports corresponding to the order input contacts are read. This reading is not validated until a given number is effected with the same result (step 32). This confirmation of the state of the order is effected to avoid contact bounces or transients.

If the order is to stop, external outage program execution ends (step 33).

In the event of washing or centrifugation, it carries on (step 34). If the motor has not started (no speed) (step 34 A), a safety subprogram is carried out for start-ups (step 35). If start-up has taken place (step 34 B), the control parameters used in the algorithm are adjusted: order value, stability parameters and so forth (step 36). These values shall depend upon the speed scale which it is in at the time. These scales could be:
- Washing scale: from stop to distribution point.
- Centrifugation scale: from distribution point on.

The imbalance detection test shall also be carried out at the distribution slope.

External outage also allows safeties (step 37):
- Tachogenerator fault protection.
- Superintensity protection.

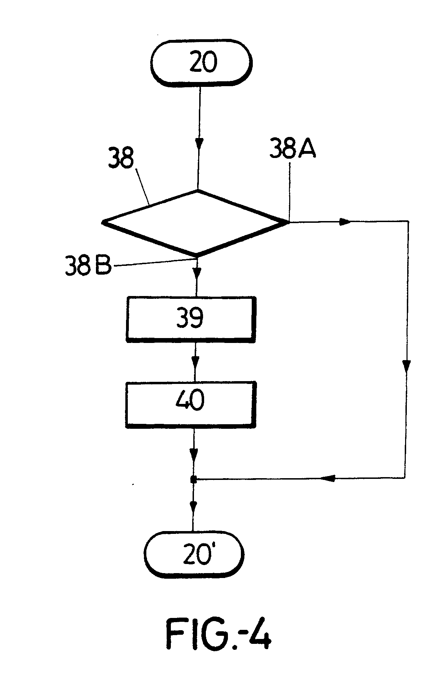

The main micro-controller (1) program can also be interrupted through timer outage. For this to take place, discounting thereof must have reached the end of the scale (zero). Whenever outage occurs, the relevant program is executed (figure 4). It must be noted that the timer temporises the washing motor triac tripping angle, and this time derives from passage through network zero passage. When timing occurs, i.e., timer outage occurs, the triac (7) port is pulsed for the same to start conducting, thereby to energise the motor.

If there is no order (step 38 A), the outage program ends directly. Otherwise (step 38 B), the triac (7) is started with a small time impulse at its port (step 39). The timer is then reset with a time of 10 ms. (step 40) so for the following tripping to occur 180° later, thereby to ensure current symmetry, since the conduction angle will be the same in both network semi-cycles.

A highly used control algorithm in controlling motors is the proportional-integrator PI control. The most important features thereof are as follows:
- No speed error in permanent system (for stage entry).
- Possibility of controlling the transitory response state (rise, surpassing time).

Starting with the classic expression in the temporary domain of a PI type adjuster another expression is reached in the discrete domain (the Laplace transform is initially used, to move on to the z transform and obtain the sampled system expression with a so-called sampling time). The expression for a PI algorithm could be as follows:

$$U_k = U_{k-1} + a_\phi e_k + a_1 e_{k-1}$$

where $U_k$ is the variable to be controlled,

$U_{k-1}$ is the value of the variable in the previous sampling,

$a_\phi$, $a_1$ are constant coefficients,

$e_k$ is the error value (order - real output value),

$e_{k-1}$ is the previous sampling error value.

Which can lead to another expression:

$$U_k = U_{k-1} + b_\phi (e_k + e_{k-1}) + b_1 (e_k - e_{k-1})$$

where $b_\phi$, $b_1$ are constant coefficients.

Implementing an algorithm of this type in a micro-controller is complicated and takes time to calculate because of arithmetic operations that are not desireable in the program developed. Another significant disadvantage lies in the scarce immunity to electric noises and to irregularities in measurement that could notably affect the final result. As an alternative to this expression, a rather more simple one could be reached, where the second and third terms are appreciably simplified. This simplification is based upon a study of the numerical behaviour of the whole algorithm with the coefficients applied in the case of the washing machine motor. The resultant expression is:

$$U_k = U_{k-1} + \text{Increase}$$

The second sum of the expression is a value applied according to the signs of $e_k$ and $e_{k-1}$. It has specifically been experimentally determined that this value depends more on the signs of errors than on values taken by the same. Practical values can be reached set forth in a table depending upon the system of operation of the motor (washing or centrifugation). In speed control of washing machine motors, the algorithm output variable will be the triac tripping angle $\alpha$ controlling the energy supplied to the motor and therefore the speed thereof. That is to say:

$$\alpha_k = \alpha_{k-1} + \text{Increase}$$

The error $e_k$ will be the difference between the order or desired speed and the real speed measured by the micro-controller (1) through the tachogenerator. What is in fact worked with this is the inverse of speed, for speed is proportional to the frequency of the tachogenerator signal and in this case comparisons are made with the period, that is in fact the inverse of speed.

The advantages provided by this algorithm are simple calculation, since it is only an arithmetic operation (adding or subtracting), and the equally important advantage of its immunity to measurement irregularities. This is due to the fact that the value of the error is not important per se, but what is really significant is the value's sign. Therefore, speed measurement can be far less accurate than before because the possibility of confusion in the error sign is much less than in the value thereof.

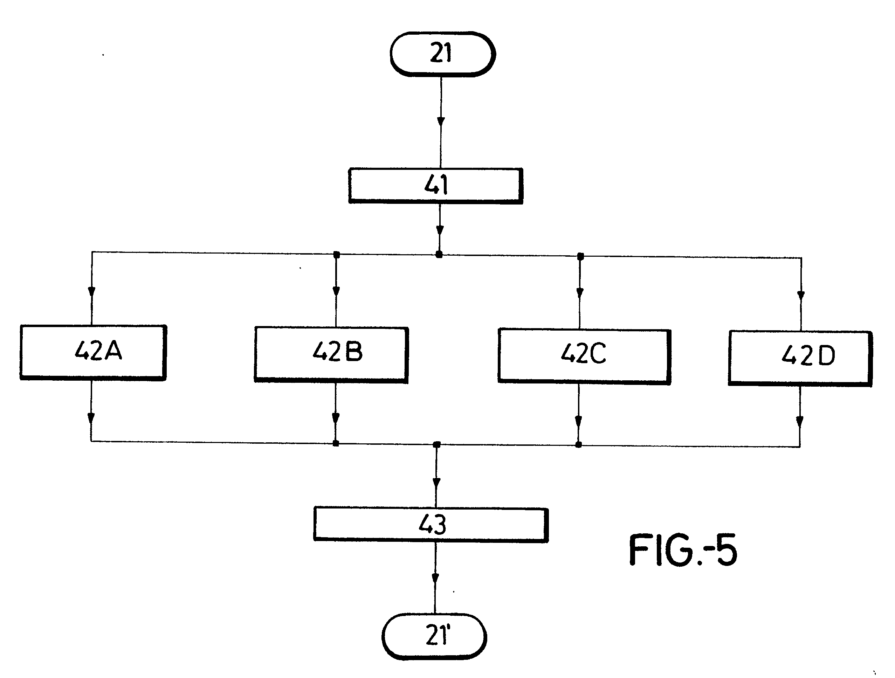

In figure 5, once the error sign is known (step 41), the value of the latter is determined adding the algorithm (steps 42 A, B, C, D) according to the signs of the last two errors applying the values tabulated for each case. After determining the increase, that may be positive or negative, depending on whether energy supply to the motor is to increase or decrease, the tripping angle is adjusted (step 43) ending the algorithm and passing to a new sampling period when the program so indicates (figure 2).

The sampling period, i.e., the time interval during which the new speed measurement is taken and the tripping angle value is adjusted, lasts for 20 ms. This time corresponds to the network period. One must not forget that the tripping angle is adjusted once every network period. This angle is temporised from the decreasing side of the signal going into the micro-controller's external outage pin. At this time, the main micro-controller program will be interrupted. The initial value of the timer discounting shall be set with the time equivalent to the tripping angle so that, when terminated, the timer is interrupted and in short, the washing motor (7) triac is started.

The values applied, according to the order speed and the signs of the last two errors found, can differ from one motor to the other and will depend on the characteristics thereof. Normally, a different table of values will have to be applied for each manufacturer.

When the wet clothes are not uniformly distributed along the washing drum walls after the distribution slope, serious problems could ensue. This concentrated mass at a point gives rise to a centrifugal force proportional to the actual mass, the drum radius and the square of the angle speed. The centrifugal force will therefore increase with mass and shall do so to a greater extent with speed.

A problem of load imbalance is posed that at a high speed can give rise to considerable vibrations in the washing machine and that can entail wear of the mechanical elements thereof (suspension and other elements). The machine must be designed to withstand the worst possible case of imbalance, i.e., that there is a cost in mechanical parts that cannot be underrated. The electronic circuit based on the micro-controller subject hereof overcomes these disadvantages because it is equipped with a method of detecting load imbalances. The detection of imbalances at issue will rely upon the study of the different in energy supply to the motor during the time the detection test lasts.

The detection test will be made at a given speed at the end of the distribution slope. This speed must be high enough to ensure that the centrifugal force is such that the clothes are wholly adhered to the drum wall, and also that it is below the machine's area of resonance speeds. A drum speed between 80 and 100 rpm is taken. From this speed, it is absolutely pointless to continue with the distribution slope for the clothes will not be further distributed, i.e., because of the centrifugal force they shall stick to a drum area and shall stay there until the speed goes down enough.

In the case of the instant invention, the speed of imbalance detection has been taken to be 90 rpm. This speed is kept constant throughout the test. Therefore, in this case there is a fixed radius (the drum radius), a fixed speed (90 rpm) and a timely mass that shall determine the existing imbalance. Speed variations arising in this position will give us a useful idea of the extent of imbalance, but at the same time will depend upon the rigidity of the control applied. A rigid control does not allow large speed variations, and regardless of the resistent torque tends to keep the constant speed as high as possible. Under such conditions it would be absurd to follow up speed in order to detect the different degrees of imbalance. It just so happens that the control algorithm used is so rigid that this method cannot be used.

A more simple solution is proposed to verify and with lesser chances of failure than the foregoing one. When the drum is turning at 90 rpm with a timely mass on its periphery the motor receives more or less energy depending on the position of the mass on the vertical plane. In other words, when the mass must be elevated from the lower to the upper drum area, the mass makes the motor brake and control supplies more energy to counterbalance this effect, and when it must be lowered, energy is taken away because the actual mass makes it accelerate. Therefore, it can be inferred that the energy changes that take place throughout the test provide information on the degree of imbalance.

All this process that appears to be complicated is implemented verifying the number of times over a time-interval that the control algorithm applies the large increase, i.e., when the error changes sign from a sampling to the following. An energy change is therefore detected that corresponds with the degree of imbalance of the load in the machine drum.

In a feedback circuit, if the feedback loop fails, then no output information is received, and the monitoring behaviour will therefore be incorrect.

In the case of speed control of the washing machine motor, if anything goes wrong with the feedback loop, the information received by the micro-controller corresponds to no motor speed.

The error will hence always be constant and equal to the order value. Output from the control algorithm will impose a tripping angle for the washing motor triac (7) corresponding to the largest amount of energy supplied (minimum tripping angle) and the motor will tend to trip infinitely. This situation is absolutely out of the question and must be rapidly controlled.

A method has been designed to detect this situation and control the motor speed under these circumstances. If the feedback loop is cut, the information received will be that the engine has stopped. This is because the signal going into the micro-controller through the speed reading pin is continuous, or, in other words, its period is infinite and the frequency thereof zero, and it is therefore inferred that there is no speed because speed is proportional to the frequency of the tacho. If the program is in this situation, it can be easily detected when the external outage of the main program takes place (see figure 3).

This outage provides for the execution of two sub-programs as last step (step 37).

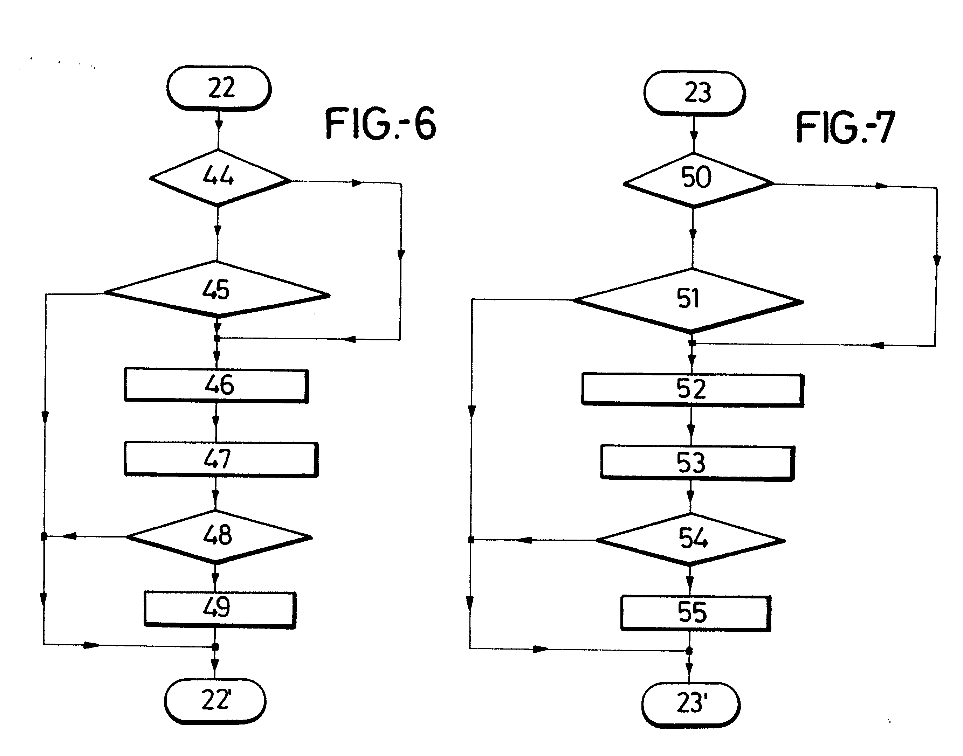

The first of them takes place according to figure 6. During step 44 the tacho alarm is checked to see whether it is activated. This is done because the situation may have been previously detected. Otherwise, a check is made to see whether the tachogenerator signal has not changed level for a fixed time (step 45).

If this happens, the procedure could be such that the tachogenerator alarm is activated (step 46), the washing triac (7) is deactivated and the motor is stopped (step 47). It can remain stopped thus indefinitely or until the order changes (step 48), whereupon there will be a new attempt at control after the respective initialisations (step 49).

Superintensity protection is effected to avoid unnecessary heating of the washing motor and undue currents that could damage other parts and blow the fuse in series with the washing motor triac (7). An important thing is that the current in the universal motor increases as speed decreases, this being due to the decrease of the opposing electromotive force, that is proportional to speed. Therefore, at a washing speed, the current can be high, while at a centrifugation speed the current will be lower. This safety approach acts at low speeds, which is when greater problems of this sort could predictably exist.

The conventional solution establishes a limit current value and maintains such current even if the speed does not reach the order. This solution ensures that the electronic circuit and the motor do not have to withstand undue currents, but does not ensure speed. In other words, if speed is not ensured in a washing cycle, neither is its main function (to wash) guaranteed. Furthermore, maintaining a fixed current of around 9 amps the motor heats up to result in the simultaneous loss of driving torque, whereupon the chances of overcoming the resistant torque are slighter since the motor will heat up more and more.

With the conventional method:
- Unnecessary heating and consumption follows.
- As the motor heats up, it loses driving torque, and therefore when again trying to overcome resistant torque, the chances of overcoming the same are slight.
- An additional cost follows in the electronic control.

With the instant system, the problems posed by the conventional system are obviated, this comprising observing the angle applied to the triac (7). This angle provides information that the energy supplied in minimal and otherwise. In a situation with a resistent torque, control acts decreasing the tripping angle (more energy). If this torque is increased, the angle will also decrease. Thus it is possible to reach the limit of having a resistent torque such that the energy supplied is as large as possible and however there is still a speed error. This means to say that the control is saturated and that the motor has no sufficient power to overcome the resistant torque. The current will be very large, the motor will be heated up and yet will fail to reach the desired order. Thereafter, if the resistant torque increases the speed will go down drastically because the motor cannot go beyond its top power to counterbalance such torque.

To detect such situation, external outage step 37 (figure 3) provides for a second subprogram whose process can be observed in figure 7. In the first place, a check is made to see whether the situation was detected before (step 50). If so, it goes on directly to take the relevant action to stop the motor. Otherwise, the method developed monitors the tripping angle and sees whether it is at its smallest (highest amount of energy) for a given time (step 51). If this is not so, the safety subprogram concludes. Otherwise, the current alarm is activated (step 52) and the motor stops (step 53). This stop can be final, if the order does not change (step 54), or, if it does, until another attempt is made at controlling following the relevant initialisations (step 55).

The method developed therefore comprises watching the tripping angle $\alpha$ and seeing whether it is at its smallest (highest amount of energy) for a given time (1 s. for instance). If during this time, it has not left saturation, it is deemed that there is a permanent speed error due to a resistant par and that the motor cannot overcome the same, i.e., the motor stops to avoid unnecessary strains.

Thus:
- The motor stops and unnecessary heating and consumption is avoided.
- As the motor does not heat up it loses no driving par, wherefore when again trying to overcome the resistent par the chances of overcoming the same are greater than in the traditional method.
- Electronic control costs go down.

We feel that the device has now been described at sufficient length for any expert in the art to have grasped the full scope of the invention and the advantages it offers.

The materials, shape, size and layout of the elements may be altered provided that this entails on modification of the essential features of the invention.

The terms used to describe the invention herein should be taken to have a broad rather than a restrictive meaning.

## Claims

1.- Digital speed controller for washing machine motors, essentially characterised in comprising a micro-processor (1) in charge of receiving signals through its various inputs, processing the same and according to results activating and/or deactivating the suitable power elements, a tachymetric pick-up measuring the real motor speed and in conjunction with the same a signal conditioner (2) for the micro-processor (1), means to define the desired theoretical speed for the washing phase being effected at that time, a circuit to indicate passage through zero (4) of the feedback line indicating the micro-processor when it must start counting to trip the mechanism controlling the power element, basically comprising an electric motor and a triac (7), a monitoring circuit (3) allowing the micro-processor (1) to recommence the programming stage being carried out if interrupted by external circumstances beyond the micro-processor (1) control, all of this connected to a power supply (6) of suitable level for the control assembly.

2.- Digital speed controller for washing machine motors, according to claim 1, characterised in that the micro-processor (1) defines a process discriminating whether the errors in the last two measurements taken through the signal conditioner circuit (2) of the tachogenerator with regard to the specific order speed have the same or an opposite sign, using this sole variable to define the tripping angle of the power element's control device, being able to positively or negatively increase its speed to suit the same to the desired speed system at all times.

3.- Digital speed controller for washing machine motors, according to claims 1 and 2, characterised in that the micro-processor (1) has another process defined allowing it to detect whether the tachogenerator is working properly, taking action according to the situation detected, stopping the engine whenever there is an order and the tachogenerator signal fails to change level within the predetermined time.

4.- Digital speed controller for washing machine motors, according to claim 3, characterised in that such motor stop is indefinite or until the order changes, wherefore there will be a new control attempt.

5.- Digital speed controller for washing machine motors, according to claims 1 and 2, characterised in that another process allows the micro-processor to discriminate imbalance situations in the machine load, which discrimination is based on the study of the error sign that appears throughout the length of the test.

6.- Digital speed controller for washing machine motors, according to claim 5, characterised in that if the imbalance test result is positive, the distribution slope starts again and such test is again carried out, and so on with another possible action being to prevent access to the highest speed levels or a combination of both options.

7.- Digital speed controller for washing machine motors, according to claims 1 and 2, characterised in that a new process controls, at low speeds, the energy supplied to the motor so that if it is at its highest for a given time-interval the motor is stopped.

8.- Digital speed controller for washing machine motors, according to claim 7, characterised in that such motor stop is indefinite or until the order changes, wherefore there will be a new control attempt.

FIG.-1

EP 0 428 469 A2

FIG.-2

EP 0 428 469 A2

FIG.-3

FIG.-4

FIG.-5

EP 0 428 469 A2

FIG.-7

FIG.-6